Europäisches Patentamt

(19) European Patent Office

Office européen des brevets

(11) Publication number: **0 112 268**
**B1**

(12) **EUROPEAN PATENT SPECIFICATION**

(45) Date of publication of patent specification: **08.07.87**    (51) Int. Cl.⁴: **F 16 J 15/36**

(21) Application number: **83630185.3**

(22) Date of filing: **11.11.83**

(54) **Mechanical seal with back-up seal for gas-turbine engines.**

(30) Priority: **20.12.82 US 451643**

(43) Date of publication of application:
**27.06.84 Bulletin 84/26**

(45) Publication of the grant of the patent:
**08.07.87 Bulletin 87/28**

(84) Designated Contracting States:
**DE FR GB IT SE**

(56) References cited:
**GB-A- 653 608**
**GB-A-2 080 891**

(73) Proprietor: **UNITED TECHNOLOGIES CORPORATION**
**United Technologies Building 1, Financial Plaza**
**Hartford, CT 06101 (US)**

(72) Inventor: **Picard, Harrison Reynolds**
**20 Laurel Drive**
**Granby Connecticut 06035 (US)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

## Description

This invention relates to a sealing means for a bearing compartment of a twin spool gas turbine engine, said sealing means having a seal plate, an annularly shaped carbon seal rotatable relative to said seal plate and having a face bearing against said seal plate in sealing relationship to prevent fluid leakage from a high pressure side to a low pressure side, an annular support means including a first annular member carrying said carbon seal, a concentric sleeve radially spaced from said annular support means and defining therewith an annular cavity, a bellows disposed in said cavity having one end bearing against said first annular member to load said carbon seal against said plate, a back-up seal for limiting leakage in the event of failure at said bellows, said back-up seal being spaced axially from the carbon seal, and attachment means for connecting said carbon seal, bellows and back-up seal to a rotatable shaft for imparting rotary motion thereto.

It is customary in a twin spool turbine type power plant to utilize a carbon seal to seal off the compartment housing the bearings supporting one of the shafts. Typically, a seal plate is attached to one rotating shaft and the carbon seal engaging the seal plate is rotatably connected to the other shaft. Means are provided to bias the carbon seal against its cooperating seal plate. In heretofore installations a labyrinth type of seal would be located in proximity to the compartment so that in the event of leakage of the mechanism supporting the primary carbon seal, the labyrinth seal would serve to minimize the same so as to prevent the oil escaping from the bearing compartment into the hostile environment of the engine or vice versa where fire could ensue.

In installations where it is desirable to bias the carbon seal with a cooperating bellows a back-up seal may be incorporated to eliminate the more complicated and expensive labyrinth type seal. A sealing means of the type according to the precharacterizing portion having such a back-up seal is described in GB—A—653 608. The known back-up seal prevents high pressure fluid from entering the bellows cavity. In case of bellows failure the carbon seal is no longer urged against the seal plate and substantial leakage therebetween may occur.

GB—A—2 080 891 concerns a sealing means having a back-up seal disposed on the low pressure side of a bellows to prevent a control leakage of fluid from a high pressure region to a low pressure region in the event that a failure occurs in the bellows unit. In case of bellows failure, high pressure fluid urges the back-up seal into sealing engagement with the carbon seal.

The object of the invention is to provide an improved sealing means for a bearing compartment of a twin spool gas turbine engine capable of maintaining the sealing relationship between the seal plate and the carbon seal in case the bellows fails and limiting leakage through the bellows.

To achieve this the sealing means of the invention is characterized in that the annular support means comprises a second annular member rigidly connected to said rotatable shaft, one of said annular members being provided with antirotational tab means engageable with spline means on the other of said annular members to allow relative axial movement therebetween, that the bellows cavity is constantly in communication with the high pressure side, and that back-up seal is disposed radially outward of the carbon seal on the low pressure side of the bellows.

Accordingly, in the case of bellows failure the high pressure fluid in the bellows cavity pressure balances the carbon seal to maintain the sealing relationship between the carbon seal and the seal plate. Further the antirotational tab means and the spline means prevent in case the bellows fails, spinning of the carbon seal relative to its support shaft as a result of being driven by the seal plate.

The seal means will now be described in greater detail with reference to the accompanying drawings, wherein:

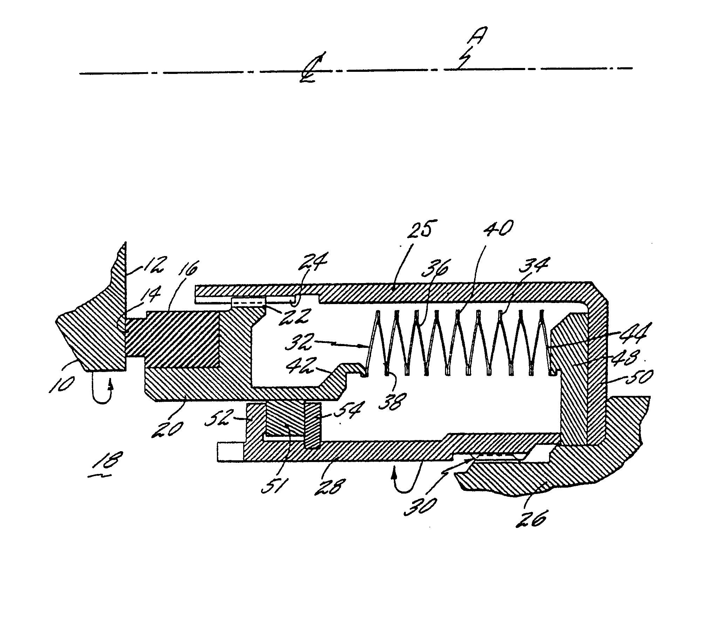

The sole Figure is a partial view partly in schematic and partly in section showing the sealing means.

The sole Figure shows a portion of the seal plate 10 which is suitably connected to the high speed shaft (rotates about the engine's center line A) of a twin spool gas turbine engine. An example of a gas turbine engine of the type where this invention would be efficacious is the JT9D manufactured by Pratt & Whitney Aircraft, a division of United Technologies Corporation the assignee of this patent application and which is incorporated herein by reference. The sealing face 12 of the seal plate is in intimate contact with the cooperating face 14 of the carbon seal 16. This carbon seal serves as the primary seal of the bearing compartment identified as reference numeral 18 and whose pressure is relatively low. Obviously, the bearing compartment which is suitably enclosed (not shown) contains the oil that is utilized to lubricate and cool the bearings mounted therein (not shown). The purpose of the primary carbon seal is to prevent the escapement of oil out of the compartment or the leakage of high pressure hot gases into the compartment to avoid fire internally of the engine.

Carbon seal 16 is formed in a ring and is supported to the annular shaped member 20 which carries on its inner diameter tabs 22. Tabs 22, in turn mate with elongated spline 24 formed on annular L-shaped member 25 which is rigidly connected to low speed shaft 26. As is well known, the high speed shaft carries the high pressure compressor and high temperature turbine and the low speed shaft carries the low pressure compressor and low temperature turbine hence the name, twin spool.

The annular member 25 is driven by the low speed shaft 26. The elongated spline 24 and tabs 22 prevent rotation of the annular member 20 and hence carbon seal 16 relative to the low speed shaft 26.

The bellows assembly comprises bellows 34 fabricated by individual convoluted elements 36 welded at the outer extremities 38 and 40. One end of bellows 34 is supported to the extending arm 42 unitary with the carbon seal support 20 and the opposite end 44 of bellows 34 is affixed to the disc 48 mounted adjacent to the radial arm 50 of annular member 24. This urges the carbon seal support 20 leftwardly as viewed in the drawing to urge the face 14 of carbon seal 16 to bear against the face 12 of seal plate 10 forming a substantially leak-tight seal. The tabs 22 while restraining circumferential movement can move axially. This prevents the higher speed seal plate 10 from driving the support member 20.

According to this invention, a back-up seal is spaced axially and disposed radially outward from the carbon seal 16 on the low pressure side of the bellows 34 and comprises a ring seal 51 of the piston ring type sandwiched between the upstanding arm 52 formed on an annular member 28 and the anti-torque member 54 supported to member 28. The annular member 28 is connected by a spline arrangement 30 to the low speed shaft 26. Ring seal 51 is sized so that its inner diameter bears against the outer diameter of carbon seal support 20 and permits a predetermined leakage so that there is a slight flow path from the high pressure side past tabs 22 into the bellows 34 (assume a leak occurred) and past the seal 51 at the point of contact with the inner diameter of member 20.

By virtue of this arrangement, the primary carbon seal 16 is pressure balanced to the close or seal position in the event of bellows failure.

The sealing means provides a substantially low heat generation and controlled air leakage of a bellows seal while providing a simple back-up to the bellows.

## Claims

1. Sealing means for a bearing compartment of a twin spool gas turbine engine, said sealing means having a seal plate (10), an annularly shaped carbon seal (16) rotatable relative to said seal plate (10) and having a face (14) bearing against said seal plate (10) in sealing relationship to prevent fluid leakage from a high pressure side to a low pressure side, an annular support means including a first annular member (20) carrying said carbon seal (16), a concentric sleeve (28) radially spaced from said annular support means and defining therewith an annular cavity, a bellows (34) disposed in said cavity having one end bearing against said first annular member (20) to load said carbon seal (16) against said seal plate (10), a back-up seal (51) for limiting leakage in the event of failure at said bellows (34), said back-up seal (51) being spaced axially from the carbon seal (16), and attachment means for connecting said carbon seal (16), bellows (34) and back-up seal (51) to a rotatable shaft (26) for imparting rotary motion thereto, characterized in that the annular support means comprises a second annular member (25) rigidly connected to said rotatable shaft (26), one of said annular members (20, 25) being provided with antirotational tab means (22) engageable with spline means (24) on the other of said annular members (20, 25) to allow relative axial movement therebetween, that the bellows cavity is constantly in communication with the high pressure side, and that back-up seal (51) is disposed radially outward of the carbon seal (16) on the low pressure side of the bellows (34).

2. Sealing means according to claim 1, characterized in that said back-up seal (51) is a piston-like ring bearing up against a sealing surface formed on said first annular member (20) and having sufficient tolerance to allow a predetermined leakage to flow therethrough when said bellows (34) fails.

## Patentansprüche

1. Dichtvorrichtung für eine Lagerkammer eines Zweiwellen-Gasturbinentriebwerks, wobei die Dichteinrichtung eine Dichtplatte (10) hat, eine ringförmige Kohledichtung (16), welche relativ zu der Dichtplatte (10) drehbar ist und eine Stirnfläche (14) hat, die mit der Dichtplatte (10) in dichter Berührung ist, um eine Fluidleckage von einer Hochdruckseite zu einer Niederdruckseite zu verhindern, eine ringförmige Halteeinrichtung, die ein erstes ringförmiges Teil (20) aufweist, das die Kohledichtung (16) trägt, eine konzentrische Büchse (28), die radialen Abstand von der ringförmigen Halteeinrichtung hat und mit dieser einen ringförmigen Hohlraum bildet, einen Federbalg (34), der in dem Hohlraum angeordnet ist und mit einem Ende an dem ersten ringförmigen Teil (20) anliegt, um die Kohledichtung (16) gegen die Dichtplatte (10) zu drücken, eine Reservedichtung (51) zum Begrenzen der Leckage im Falle des Versagens des Federbalgs (34), wobei die Reservedichtung (51) axialen Abstand von der Kohledichtung (16) hat, und eine Befestigungseinrichtung zum Verbinden der Kohledichtung (16), des Federbalgs (34) und der Reservedichtung (51) mit einer drehbaren Welle (26), mittels welcher dieselben in Drehung versetzbar sind, dadurch gekennzeichnet, daß die ringförmige Halteeinrichtung ein zweites ringförmiges Teil (25) aufweist, das mit der drehbaren Welle (26) fest verbunden ist, wobei eines der beiden ringförmigen Teile (20, 25) mit einer eine Drehung verhindernden Lappeneinrichtung (22) versehen ist, welche mit einer Keilnuteinrichtung (24) an dem anderen der beiden ringförmigen Teile (20, 25) in Eingriff bringbar ist, um zwischen diesen eine relative Axialbewegung zu gestatten, daß der Federbalghohlraum ständig mit der Hochdruckseite in Verbindung ist und daß die Reservedichtung (51) radial außerhalb der Kohledichtung (16) auf der Niederdruckseite des Federbalgs (34) angeordnet ist.

2. Dichtvorrichtung nach Anspruch 1, dadurch gekennzeichnet, daß die Reservedichtung (51) ein kolbenartiger Ring ist, der an einer Dichtfläche anliegt, die an dem ersten ringförmigen Teil (20) gebildet ist, und ausreichend Toleranz hat, um einen vorbestimmten Leckdurchfluß zu gestatten, wenn der Federbalg (34) versagt.

**Revendications**

1. Dispositif d'étanchéité pour un compartiment de paliers d'un moteur à turbine à gaz à double corps, ce dispositif d'étanchéité comportant une plaque d'étanchéité (10), un joint d'étanchéité en carbone (16) de forme annulaire, pouvant tourner par rapport à la plaque d'étanchéité (10) et comportant une face (14) appliquée contre la plaque d'étanchéité (10), d'une manière étanche, pour empêcher une fuite de fluide à partir d'un côté à haute pression en direction d'un côté à basse pression, un support annulaire comportant un premier organe annulaire (20) portant le joint d'étanchéité en carbone (16), une douille concentrique (28) espacée radialement par rapport au support annulaire et définissant avec celui-ci une cavité annulaire, un soufflet (34) disposé dans cette cavité et dont une extrémité porte contre le premier organe annulaire (20) afin de solliciter le joint d'étanchéité en carbone (16) et le repousser contre la plaque d'étanchéité (10), un joint d'étanchéité de secours (51) pour limiter la fuite dans le cas d'une défaillance du soufflet (34), ce joint d'étanchéité de secours (51) étant espacé axialement du joint d'étanchéité en carbone (16), et un dispositif de fixation pour relier le joint d'étanchéité en carbone (16), le soufflet (34) et le joint d'étanchéité de secours (51) à un arbre rotatif (26), afin d'entraîner en rotation ces éléments, caractérisé en ce que le support annulaire comprend un second organe annulaire (25) relié rigidement à l'arbre rotatif (26), l'un des organes annulaires (20, 25) étant pourvu de pattes antirotation en prise avec des cannelures (24) prévues sur l'autre organe annulaire (20, 25), afin de permettre un mouvement axial relatif entre eux, en ce que la cavité du soufflet est constamment en communication avec le côté à haute pression et en ce que le joint d'étanchéité de secours (51) est disposé, dans le sens radial, à l'extérieur du joint d'étanchéité en carbone (16), du côté à basse pression du soufflet (34).

2. Dispositif d'étanchéité suivant la revendication 1 caractérisé en ce que le joint d'étanchéité de secours (51) est un anneau formant piston qui porte contre une surface d'étanchéité formée sur le premier organe annulaire (20) et qui présente une tolérance suffisante pour permettre qu'une fuite prédéterminée s'établisse à travers lui lorsque le soufflet (34) est défaillant.